(19) Europäisches Patentamt
European Patent Office
Office européen des brevets

(11) **EP 1 786 093 B1**

(12) **EUROPÄISCHE PATENTSCHRIFT**

(45) Veröffentlichungstag und Bekanntmachung des Hinweises auf die Patenterteilung:
**29.04.2009   Patentblatt 2009/18**

(51) Int Cl.:
***H02P 6/14*** *(2006.01)*

(21) Anmeldenummer: **06019421.4**

(22) Anmeldetag: **16.09.2006**

(54) **Verfahren und Anordnung zur Kommutierung eines elektronisch kommutierten Motors**

Method and device for commutating an electronic commutated motor

Procédure et dispositif pour commuter un moteur à commutation électronique

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.11.2005   DE 102005055327**

(43) Veröffentlichungstag der Anmeldung:
**16.05.2007   Patentblatt 2007/20**

(73) Patentinhaber: **ebm-papst St. Georgen GmbH & Co. KG**
**78112 St. Georgen (DE)**

(72) Erfinder:
• **Dufner, Thomas**
  **78136 Schonach (DE)**

• **Heller, Frank**
  **78126 Königsfeld-Burgberg (DE)**
• **Karwath, Arno**
  **78652 Deisslingen (DE)**

(74) Vertreter: **Raible, Tobias**
**Raible & Raible**
**Schoderstrasse 10**
**70192 Stuttgart (DE)**

(56) Entgegenhaltungen:
**WO-A-01/99267            DE-A1- 4 100 864**
**US-A- 4 988 939          US-A- 5 361 021**

**Beschreibung**

Die Erfindung betrifft ein Verfahren und eine Anordnung zur Kommutierung eines elektronisch kommutierten Motors.

Beim Betrieb von elektronisch kommutierten Motoren (ECM) können bei der Kommutierung Unsymmetrien auftreten, welche den Wirkungsgrad beeinflussen. Die Gründe hierfür kann man unterscheiden in statische Einflüsse und dynamische Einflüsse.

Beispiele für statische Einflüsse sind Hallsensoren (oder sonstige Sensoren für die Rotorstellung), welche ungenau angeordnet sind; Permanentmagnete des Rotors, die unsymmetrisch magnetisiert oder montiert sind; Streuflüsse im Stator; Unsymmetrien des Motorstroms.

Beispiele für dynamische Einflüsse sind Drehzahlschwankungen durch externe Einflüsse, insbesondere Temperaturänderungen; Rotorschwingungen; Softwarejitter. Darunter versteht man kleine Zeitdifferenzen bei der Ausführung von Befehlen, die meist nur wenige Mikrosekunden betragen und zufallsbedingt auftreten, also nicht beeinflussbar sind.

Aus der DE 41 00 864 A1 ist ein Verfahren zur Ansteuerung eines elektronisch gesteuerten Motors bekannt. Dieser hat einen permanentmagnetischen Rotor, dessen Drehstellung fortlaufend mittels eines optischen Winkelgebers mit hoher Auflösung erfasst wird. Der Motor hat einen dreisträngigen Stator, in den ein magnetisches Drehfeld eingeprägt wird. Hierzu werden an die Stränge des Stators phasenverschobene Wechselspannungen angelegt, die miteinander ein Drehspannungssystem aufbauen. Die Steuerung dieser Wechselspannungen erfolgt durch den optischen Winkelgeber in der Weise, dass jedem gemessenen Drehwinkel ein bestimmter gespeicherter Wert für den Strom im betreffenden Strang zugeordnet wird.

Bei diesem Motor ist eine Einrichtung zur Erfassung der Motorbelastung vorgesehen, welche den zu den Strängen des Motors fließenden Laststrom misst und einem Mikrocontroller meldet.

Der Mikrocontroller hat einen Speicher, in dem ein Sinusverlauf in Form von 360 Stützwerten gespeichert ist. Mit zunehmendem Laststrom im Motor wird die Phasenlage der sinusförmigen Strangströme nach früh verschoben, um ein weiterhin hohes Drehmoment zu bewirken.

Aus der WO 2001/099267 A1 kennt man eine Vorrichtung und ein Verfahren zur Verbesserung des Einschaltwinkels bei einem elektronisch kommutierten Elektromotor. Bei diesem Motor generieren die Ströme in den Phasen des Motors entsprechende Strom-Zeit-Flächen. Während der ersten Hälfte einer vorgegebenen Einschaltdauer wird eine erste Größe für die Phasenströme ermittelt, und während einer zweiten Hälfte der vorgegebenen Einschaltdauer wird eine zweite Größe für die Inversen der Phasenströme ermittelt. Der Einschaltwinkel von Wicklungen, für die die erste Größe kleiner als die zweite ist, wird verkleinert, und der Einschaltwinkel von Wicklungen, für die die erste Größe größer ist als die zweite, wird vergrößert. Sind erste Größe und zweite Größe gleich groß, so wird der Einschaltwinkel beibehalten. Die Einschaltwinkel der Wicklungen werden so ermittelt, dass die erste und die entsprechende zweite Größe gleich groß werden. Auf diese Weise soll der Wirkungsgrad des Elektromotors verbessert werden.

Es ist eine Aufgabe der Erfindung, ein neues Verfahren und eine neue Anordnung zur Kommutierung eines elektronisch kommutierten Motors bereit zu stellen.

Diese Aufgabe wird durch ein Verfahren nach Anspruch 1 und einen elektronisch kommutierten Motor nach Anspruch 20 gelöst.

Der Erfindung liegt die Erkenntnis zugrunde, dass statische und dynamische Einflüsse, also z.B. Fertigungstoleranzen bei der Herstellung eines ECM, sowie gewisse Randbedingungen und Betriebsparameter, zu Unsymmetrien des Motorstroms führen können. Ein Grundgedanke der Erfindung besteht nun darin, den Motorstrom eines ECM durch eine individualisierte Kommutierung derart zu beeinflussen, dass diese Unsymmetrien reduziert werden und somit der Wirkungsgrad des ECM verbessert wird. Die Erfindung ist hierbei nicht auf einen bestimmten Motorentyp beschränkt.

Insbesondere wird die Aufgabe der vorliegenden Erfindung durch ein Verfahren gemäß Anspruch 1 gelöst. Dementsprechend wird eine Unsymmetrie im Motorstrom durch Bestimmung einer Abweichung ermittelt, welche eine Änderung des Motorstroms während der Drehung des Rotors des ECM angibt. In Abhängigkeit von der ermittelten Abweichung wird ein Offset-Wert ermittelt, der dazu geeignet ist, einen vorgegebenen Zeitpunkt für eine Kommutierung des Stators des ECM bei der Drehung des Rotors zu beeinflussen, um eine Symmetrierung des Motorstroms zu bewirken.

Auf diese Weise können Unsymmetrien des Motorstroms eines ECM bei laufendem Motor korrigiert werden. Somit kann auf aufwändige Verfahren zur Kompensation von Fertigungstoleranzen nach der Herstellung verzichtet werden, und ungünstige Randbedingungen und Betriebsparameter können einfach und schnell ausgeglichen werden. Beispielsweise kann anstelle eines gebräuchlichen Wuchtens in eine Tasche des Rotors das billigere und schnellere Fräswuchten bei den Rotoren solcher ECM verwendet werden, da auch ein nicht optimales Fräsergebnis im Betrieb des ECM durch die erfindungsgemäße Stromsymmetrierung kompensiert wird.

Die Aufgabe der vorliegenden Erfindung wird ebenfalls durch einen ECM gemäß Anspruch 20 gelöst.

Weitere Einzelheiten und vorteilhafte Weiterbildungen der Erfindung ergeben sich aus den im Folgenden beschriebenen und in den Zeichnungen dargestellten Ausführungsbeispielen. Es zeigt:

Fig. 1    ein vereinfachtes Schaltbild einer Vorrichtung zur Symmetrierung des Motorstroms eines ECM gemäß einer bevorzugten Ausführungsform der Erfindung,

Fig. 2    eine schematische Darstellung eines Verfahrens zur Kommutierung des ECM von Fig. 1 gemäß einer Ausführungsform der Erfindung,

Fig. 3A    eine schematische Darstellung des Motorstroms des ECM der Fig. 1 bei einer Frühkommutierung, aber ohne Symmetrierung der Ströme,

Fig. 3B    eine schematische Darstellung des Motorstroms des ECM von Fig. 1 bei einer Kommutierung gemäß einer Ausführungsform der Erfindung, also mit symmetrierten Strömen,

Fig. 4    ein Flussdiagramm eines Verfahrens zur Stromsymmetrierung des Motorstroms des ECM von Fig. 1 gemäß einer Ausführungsform der Erfindung,

Fig. 5    eine schematische Darstellung des Ablaufs eines erfindungsgemäßen Verfahrens zur Stromsymmetrierung des Motorstroms des ECM von Fig. 1 gemäß einer Ausführungsform der Erfindung,

Fig. 6    ein Flussdiagramm eines Verfahrens zur Durchführung einer Interrupt Service Routine gemäß einer Ausführungsform der Erfindung,

Fig. 7    ein Flussdiagramm eines Verfahrens zur Bestimmung eines KommutierungsOffsets gemäß einer Ausführungsform der Erfindung, und

Fig. 8    ein Flussdiagramm eines Verfahrens zur Durchführung einer Frühkommutierung gemäß einer Ausführungsform der Erfindung.

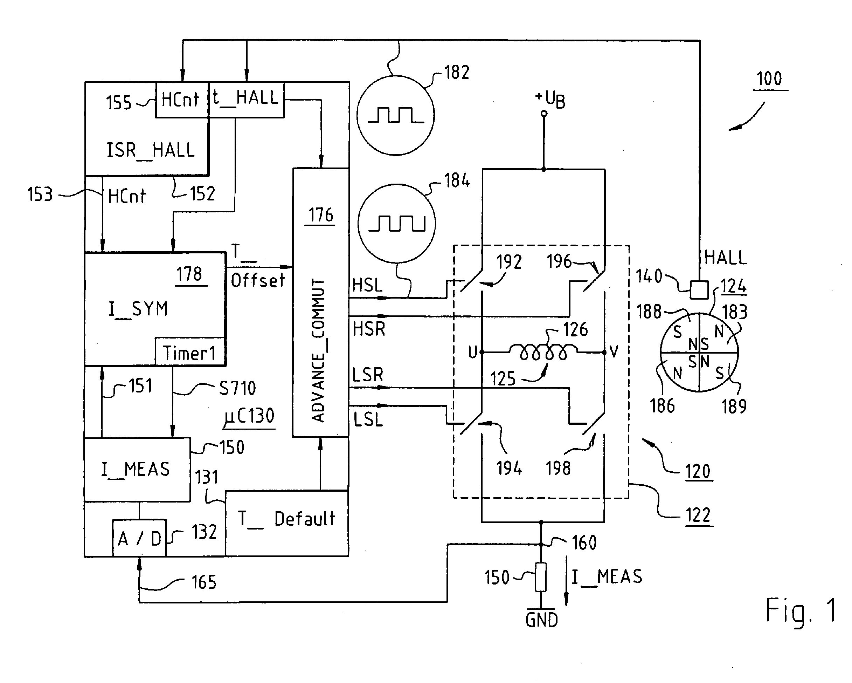

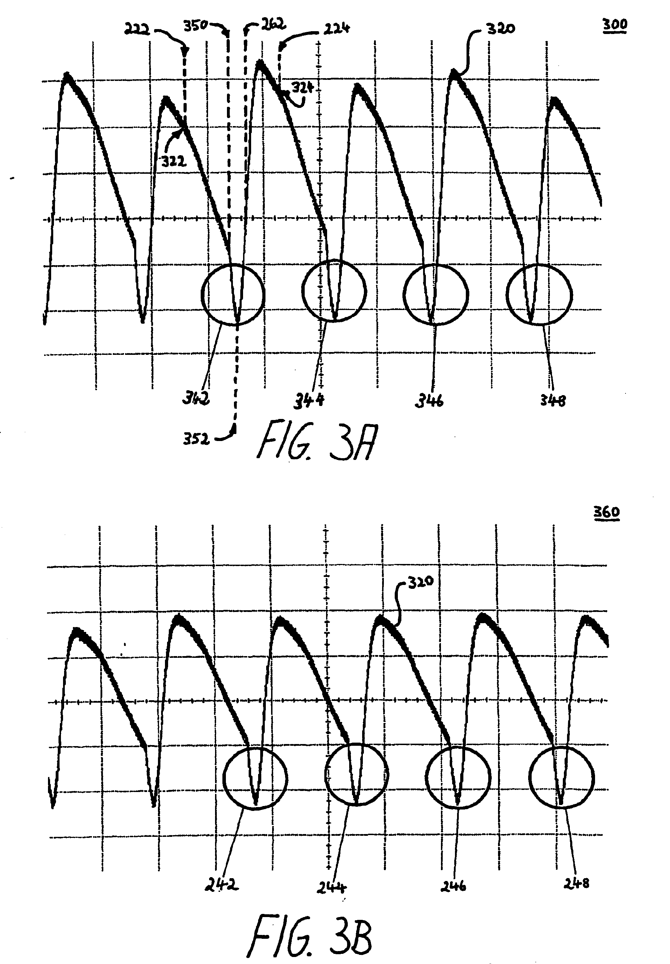

**Fig. 1** zeigt ein vereinfachtes Schaltbild, welches die prinzipielle Funktionsweise einer Vorrichtung 100 zum Betrieb eines ECM 120 gemäß der vorliegenden Erfindung illustriert. Die Vorrichtung 100 ist dazu ausgebildet, durch eine geeignete Kommutierung des ECM 120 eine Symmetrierung der im Motor fließenden Ströme zu bewirken , wie sie z.B. in Fig. 3A ohne Symmetrierung und in Fig. 3B mit Symmetrierung dargestellt sind.

Der ECM 120 hat einen Rotor 124 und einen Stator 125 mit mindestens einem Strang 126. Der Rotor 124 ist beispielhaft als permanent magnetischer Rotor mit zwei Magnetpolpaaren, also vier Magnetpolen 183, 186, 188, 189, dargestellt. Alternativ kann der Rotor 124 durch Zuführung von Strom erregt werden, so dass auf Permanentmagnete verzichtet werden kann. Der Stator 125 ist einsträngig dargestellt, d.h. mit einem einzigen Strang (Phase) 126. Ebenso wäre auch eine andere Strangzahl möglich. Der Strang 126 hat zwei Anschlüsse U und V, über die er mit der Endstufe 122 verbunden ist. Als einsträngiger Motor wird gewöhnlich ein Motor mit einem Reluktanz-Hilfsmoment verwendet, damit sich der Rotor beim Einschalten in einer Drehstellung befindet, aus der er sicher starten kann.

Die Endstufe 122 dient zur Beeinflussung des Motorstroms im Strang 126 und ist beispielhaft als Vollbrückenschaltung mit vier Halbleiterschaltern 192, 194, 196, 198 ausgebildet. Die Halbleiterschalter 192, 194 sind mit dem Anschluss U des Strangs 126 verbunden und bilden eine erste Halbbrücke. Der Anschluss V des Strangs 126 ist mit den Halbleiterschaltern 196, 198 verbunden, welche eine zweite Halbbrücke bilden.

Eingangsseitig ist die Endstufe 122 mit einer Versorgungsspannung $+U_B$ verbunden. Ausgangsseitig ist die Endstufe 122 mit einem Knotenpunkt 160 verbunden. Dieser ist über einen Fußpunktwiderstand 150 mit Masse (GND) und über eine Leitung 165 mit einer Steuerung 130 ($\mu$C) verbunden. Der Fußpunktwiderstand 150 dient zur Messung des Motorstroms I_MEAS. Hierzu wird eine dem Motorstrom I_MEAS proportionale Spannung $U_{I\_MEAS}$ am Fußpunktwiderstand 150 abgegriffen und einem A/D-Wandler 132 der Steuerung 130 zugeführt, welche daraus einen Wert für den Motorstrom I_MEAS ermittelt.

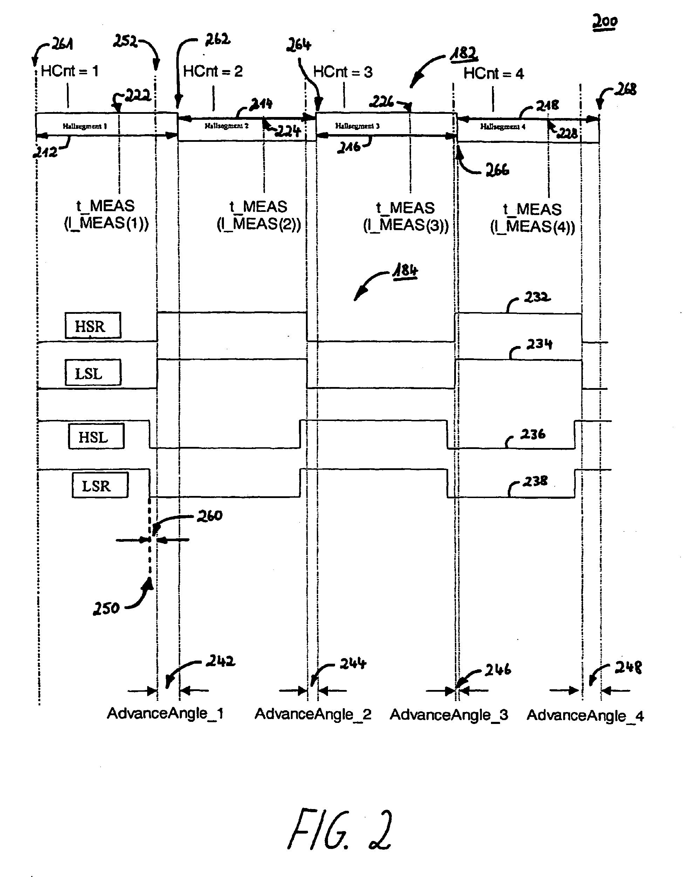

Die Steuerung 130 ist eingangsseitig mit mindestens einem Rotorstellungssensor 140 verbunden und erhält von diesem ein Rotorstellungssignal 182 (HALL). Die Steuerung 130 erzeugt Kommutierungssignale 184 (HSL, HSR, LSL, LSR) für die Endstufe 122 in Abhängigkeit vom Rotorstellungssignal 182. Die Kommutierungssignale 184 werden den Halbleiterschaltern 192, 194, 196, 198 zugeführt, und bewirken dort Kommutierungsvorgänge. Diese liegen jeweils im Bereich der Stellen, an denen der Rotorstellungssensor 140 einen Polwechsel des Rotormagneten 124 erfasst. In Fig. 2 sind diese Stellen mit 261, 262, 263, 264 bezeichnet. Wie man sieht, liegt z.B. der Kommutierungsvorgang 252 etwas vor der Stelle 262, an der sich das Hallsignal 182 ändert und dadurch einen Polwechsel anzeigt, also eine bestimmte Drehstellung des Rotors 124.

Gemäß einer bevorzugten Ausführungsform der Erfindung ist die Steuerung 130 dazu ausgebildet, die Kommutierungssignale 184 für die Endstufe 122 unter Verwendung einer Steuerroutine 176 (ADVANCE_COMMUT) derart zu erzeugen, dass eine Frühkommutierung des ECM 120 mit einem so genannten Zündwinkel, welcher die Phasenlage der Kommutierung beschreibt, bewirkt wird. Unter dem "Zündwinkel" versteht man den Beginn der Kommutierung, die bei einer Frühkommutierung nicht zum Zeitpunkt einer Änderung des Rotorstellungssignals, sondern zeitlich versetzt hierzu erfolgt. Ein Vorgabe-Zündwinkel wird z.B. bei einer Kalibrierung des ECM 120, beispielsweise einer Selbstkalibrierung, als Default-Zündwinkel bestimmt und von der Steuerung 130 in einem Speicher 131 gespeichert. (Der Begriff "Zündwinkel" ist wegen seiner Anschaulichkeit aus der Automobiltechnik übernommen worden, obwohl bei einem Elektromotor nichts "gezündet" wird.) Bei einem Motor 120, der im Betrieb eine etwa konstante Drehzahl hat, kann dieser Winkel in Form einer Vorgabezeit T_Default gespeichert werden.

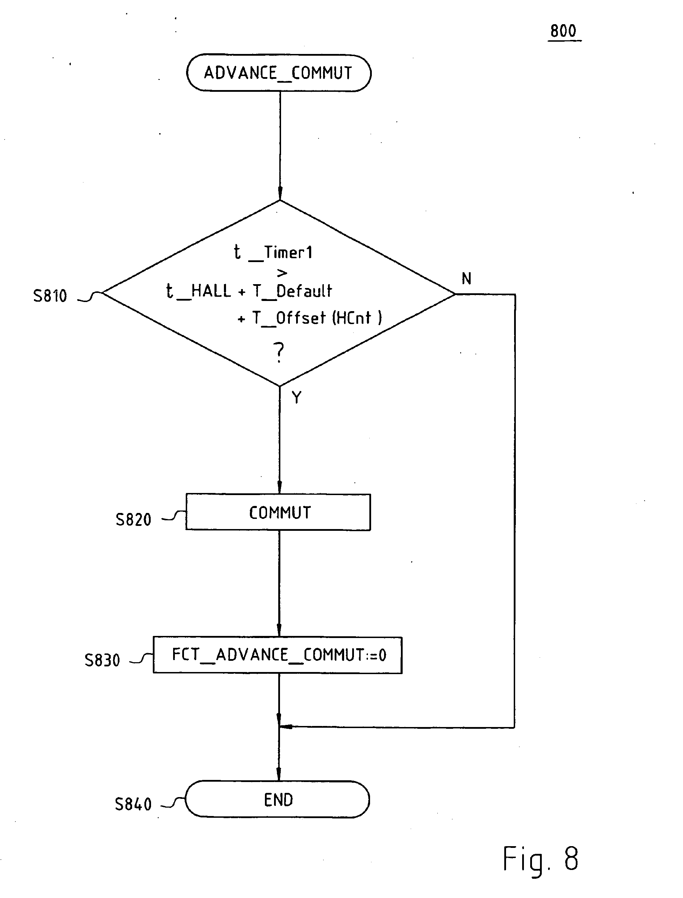

Für jeden Kommutierungsvorgang der Endstufe 122 bestimmt die Steuerung 130 unter Verwendung einer Steuerroutine 178 (I_SYM) geeignete Offset-Werte zur individuellen Modifikation des Zündwinkels für jeden Polwechsel. Somit kann die Kommutierung bei jeder Änderung 261, 262, 263, 264 des Rotorstellungssignals 182 bzw. jedem Polwechsel am Rotorstellungssensor 140 mit einem separaten, individuellen Zündwinkel erfolgen, welcher unter Verwendung eines entsprechenden, zugeordneten Offset-Wertes aus dem Vorgabe-Zündwinkel ermittelt wird, vgl. S810 in Fig. 8. Dies ermöglicht eine Ansteuerung der Halbleiterschalter 192 bis 198 der Endstufe 122 derart, dass über geeignete Ein- bzw. Ausschaltzeiten eine Symmetrierung des Motorstroms erreicht wird, wie ein Vergleich von *Fig*. 3A (ohne Symmetrierung) mit Fig. 3B (mit Symmetrierung) zeigt.

Wie Fig. 1 zeigt, hat die Steuereinheit 130 eine Einheit 150, mit der ein Augenblickswert I_MEAS(HCnt) gemessen, digitalisiert und über eine Leitung 151 dem Softwaremodul 178 (I_SYM) zugeführt wird.

Das Modul 178 erhält auch von einem Modul 152 (ISR_HALL) über eine Leitung 153 ein digitalisiertes Signal HCnt, welches anzeigt, in welchem Drehstellungsbereich sich der Rotor 124 befindet.

Hierzu folgendes: Beim Ausführungsbeispiel hat der Rotormagnet 124 vier Pole 183, 186, 188, 189. Wenn also das Signal 182 einen Nordpol anzeigt, kann dies bedeuten, dass dem Sensor 140 der Nordpol 183 oder der Nordpol 186 gegenüberliegt.

Um die Rotorstellung für das Modul 152 eindeutig zu machen, hat dieses einen Zähler 155 HCnt, der bei laufendem Motor ständig die Pole des Rotors 124 in der Folge (1)-(2)-(3)-(4)-(1)-(2)-(3)-(4)-(1) ... zählt, d.h. die Steuereinheit 130 weiß dann, dass der gemessene Strom I_MEAS(1) der Strom ist, der gemessen wurde, während sich der Rotor 124 im Bereich (1) befindet, ebenso dass I_MEAS(2) der Strom ist, der gemessen wurde, während sich der Rotor 124 im Bereich (2) befindet, etc. Allgemein ausgedrückt bedeutet also

I_MEAS(HCnt) den Strom, der gemessen wurde, während sich der Rotor 124 im aktuellen Rotorbereich HCnt befindet, also z.B. im Bereich (4), und

I_MEAS(HCnt-1) bedeutet analog den Strom, der gemessen wurde, während sich der Strom im vorhergehenden Rotorbereich (HCnt-1) befand, also z.B. im Bereich (3), wobei die Bereiche (wegen der Drehung des Rotors 124) im Betrieb ständig durchlaufen werden.

Das Modul 178 (I_SYM) erhält beim Ausführungsbeispiel zwei Stromsignale, die mit

I_MEAS(HCnt)

und mit

I_MEAS(HCnt-1)

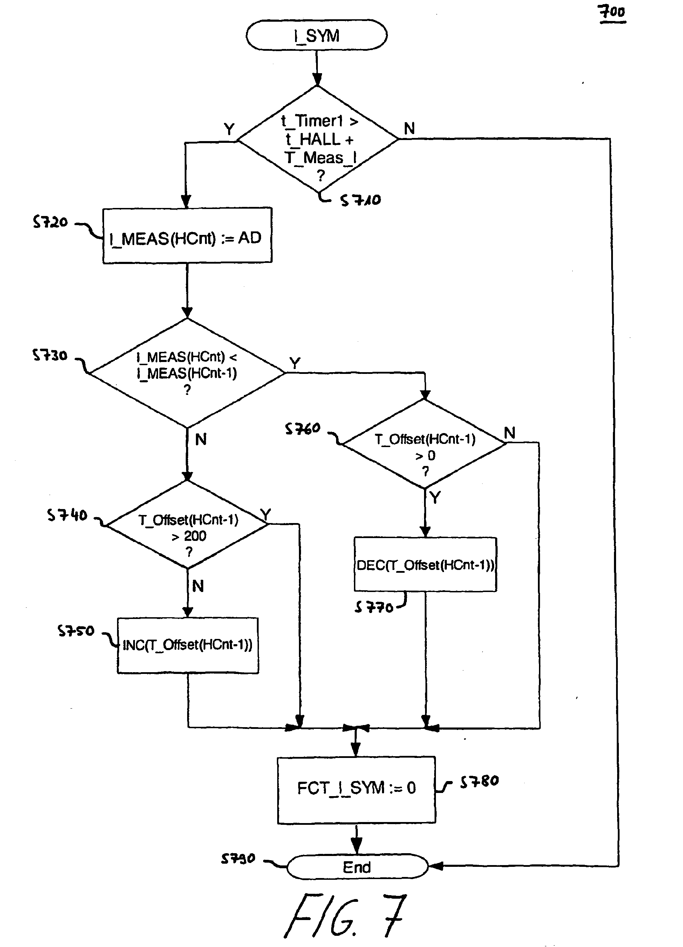

bezeichnet werden, also den Strom, der im aktuellen Rotorbereich HCnt gemessen wurde, und den Strom, der im vorhergehenden Rotorbereich (HCnt-1) gemessen wurde. Das ist in Fig. 7 in den Schritten S720 und S730 dargestellt. Dort werden diese Ströme fortlaufend miteinander verglichen. Bei einem idealen Motor sollten sie gleich groß sein. Im Modul 178 (I_SYM) werden die Zündwinkel für den Rotorbereich (1), für den Rotorbereich (2), für den Rotorbereich (3) und für den Rotorbereich (4) fortlaufend optimiert, um diesem Ideal gleich großer Ströme möglichst nahe zu kommen. Dies wird nachfolgend beschrieben. Diese Optimierung findet also im Normalfall fortlaufend statt, d.h. wenn sich z.B. die Temperatur des Motors ändert, ändern sich auch die Zündwinkel für alle vier Bereiche (1), (2), (3) und (4), aber die Werte für die Zündwinkel werden sich im Normalfall voneinander unterscheiden, um einen optimierten Motor zu erhalten.

Die Funktionsweise der Vorrichtung 100 zur Kommutierung des ECM 120 mit individuellen Zündwinkeln wird unter Bezugnahme auf Fig. 2 weiter beschrieben.

**Fig. 2** zeigt ein Ablaufdiagramm 200 eines Verfahrens zur Kommutierung des ECM 120 gemäß einer bevorzugten Ausführungsform der Erfindung. Das Ablaufdiagramm 200 zeigt oben das vom Rotorstellungssensor 140 erzeugte Rotorstellungssignal 182, und es zeigt in seinem unteren Teil die von der Steuerung 130 erzeugten Kommutierungssignale 184, die in der gleichen Weise wie in Fig. 1 mit HSR, LSL, HSL und LSR bezeichnet sind. Man erkennt, dass bei diesem Beispiel die Kommutierungssignale gegenüber dem Rotorstellungssignal 182 unterschiedlich stark in der Phase verschoben sind, d.h. für jedes Hallsegment ist die Phasenverschiebung anders. Die Erfindung befasst sich mit der Optimierung dieser unterschiedlichen Phasenverschiebungen.

Das Rotorstellungssignal 182 ist für eine komplette mechanische Umdrehung des Rotors 124 mit den vier Magnetpolen 183, 186, 188, 189 dargestellt und hat vier unterschiedliche, als Hallsegmente (1) bis (4) gekennzeichnete Bereiche 212, 214, 216, 218. Jeder dieser Bereiche 212, 214, 216, 218 wird von der Steuerung 130 unter Verwendung der Variablen HCnt einem bestimmten Pol des Rotors 124 zugeordnet. Wie oben beschrieben, ist bei diesem Beispiel der Rotor 124 vierpolig. Deshalb ist HCnt = (Cnt mod 4) + 1, wobei Cnt eine Ganzzahl mit Cnt ≥ 0 ist, welche bei Inbetriebnahme des ECM 120 an einer beliebigen Drehstellung des Rotors 124 zu Cnt = 0 gesetzt wird und anschließend im Betrieb des ECM 120 bei jedem Polwechsel um 1 inkrementiert wird. Somit kann die Variable HCnt die ganzzahligen Werte (1) bis (4) annehmen, sodass das Rotorstellungssignal 182 zu jedem beliebigen Zeitpunkt im Betrieb der Vorrichtung 100 von Fig. 1 einem bestimmten Pol zugeordnet werden kann. Wie Fig. 2 zeigt, wird dem Bereich 212 ein erster Pol (HCnt = (1)), dem Bereich 214 ein zweiter Pol (HCnt = (2)), dem Bereich 216 ein dritter Pol (HCnt = (3)) und dem Bereich 218 ein vierter Pol (HCnt = (4)) des Rotors 124 zugeordnet. Hierbei entspricht der erste Pol beispielsweise dem Pol 188, der zweite Pol dem Pol 186, der dritte Pol dem Pol 189 und der vierte Pol dem Pol 183 des Rotors 124 von Fig. 1. Diese Zuordnung ändert sich gewöhnlich, wenn der Motor ausgeschaltet war und wieder eingeschaltet wird.

Jedes der Kommutierungssignale 184 (HSR, LSL, HSL, LSR) ist in Fig. 2 als ein separates Signal 232 bis 238 dargestellt, welches den Zustand "HOCH" oder "NIEDRIG" annehmen kann. Das Signal 232 zeigt das Kommutierungssignal HSR ("High Side Right") zur Ansteuerung des Halbleiterschalters 196. Das Signal 234 zeigt das Kommutierungssignal LSL ("Low Side Left") zur Ansteuerung des Halbleiterschalters 194. Das Signal 236 zeigt das Kommutierungssignal HSL ("High Side Left") zur Ansteuerung des Halbleiterschalters 192. Das Signal 238 zeigt das Kommutierungssignal LSR ("Low Side Right") zur Ansteuerung des Halbleiterschalters 198.

Für jede Kommutierung werden die Kommutierungssignale 232 bis 238 derart erzeugt, dass diejenigen von den Halbleiterschaltern 192 bis 198, die im Augenblick eingeschaltet sind, ausgeschaltet werden, und dass diejenigen von den Halbleiterschaltern 192 bis 198, die ausgeschaltet sind, eingeschaltet werden.

Beispielsweise werden beim Übergang vom Bereich 212 ("Hallsegment 1") des ersten Pols (HCnt = (1)) zum Bereich 214 ("Hallsegment 2") des zweiten Pols (HCnt = (2)) zunächst an einem Zeitpunkt 250 die Kommutierungssignale 236 (HSL) und 238 (LSR) von "HOCH" auf "NIEDRIG" gesetzt. Dadurch werden die Halbleiterschalter 192 und 198 ausgeschaltet. Nach einer so genannten "Kommutierungslücke" bzw. "Totzeit" 260 werden die Kommutierungssignale 232 (HSR) und 234 (LSL) dann zum Zeitpunkt 252 von "NIEDRIG" auf "HOCH" gesetzt. Dadurch werden die Halbleiterschalter 196 und 194 eingeschaltet. Die Kommutierungslücke 260 definiert eine minimale Zeitdauer zwischen den durchgeführten Aus- und Einschaltvorgängen, welche erforderlich ist, um einen Brückenkurzschluss in der Endstufe 122 zu vermeiden.

Für den Fall, dass ein Abbauen des Motorstroms wünschenswert ist, kann die Kommutierungslücke jedoch auch ausreichend groß gewählt werden, um ein "Kreisen" (Zirkulieren) des Stromes durch den Strang 126 und die beiden Halbleiterschalter 194, 198 zu ermöglichen, damit dieser Strom mechanische Energie erzeugt, wenn sein Wert abnimmt. Bei dieser Alternative sind dann die beiden Halbleiterschalter 192, 196 während der Kommutierungslücke nicht leitend.

Wie Fig. 2 zeigt, werden oberhalb einer bestimmten Mindestdrehzahl bei Umschaltvorgängen der Kommutierungssignale 232 bis 238 diejenigen der Halbleiterschalter 192 bis 198, die eingeschaltet werden, nicht zu Zeitpunkten eingeschaltet, an denen Polwechsel am Rotorstellungssensor 140 erfolgen. (Diese Zeitpunkte sind mit 261, 262, 264, 266, 268 bezeichnet.) Vielmehr werden die Einschaltvorgänge zeitlich verfrüht durchgeführt, d.h. es handelt sich wie erläutert um eine Frühkommutierung.

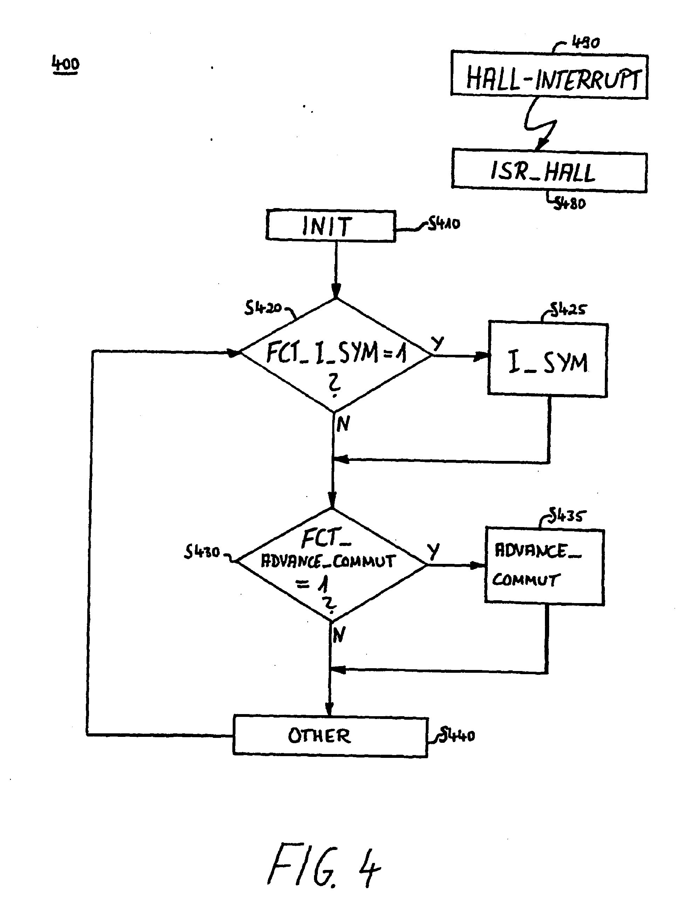

Beispielsweise werden die Kommutierungssignale 232 (HSR) und 234 (LSL) beim Polwechsel vom ersten Pol (HCnt = 1) zum zweiten Pol (HCnt = 2) nicht zum Zeitpunkt 262 des Polwechsels von "NIEDRIG" auf "HOCH" umgeschaltet, sondern schon zu einem früheren Zeitpunkt 252, welcher um einen Zündwinkel 242 (AdvanceAngle_1) vor diesem Zeitpunkt 262 liegt. Dieser Zündwinkel 242 ist individuell für diesen Polwechsel bestimmt, wie bei Fig. 4 bis 8 erläutert wird. Analog hierzu wird für jeden Polwechsel ein individueller Zündwinkel bestimmt. Gemäß Fig. 2 wird hierbei für den Polwechsel vom zweiten Pol (HCnt = 2) zum dritten Pol (HCnt = 3) ein Zündwinkel 244 (AdvanceAngle_2), für den Polwechsel vom dritten Pol (HCnt = 3) zum vierten Pol (HCnt = 4) ein Zündwinkel 246 (AdvanceAngle_3) und für den Polwechsel vom vierten Pol (HCnt = 4) zurück zum ersten Pol (HCnt = 1) ein Zündwinkel 248 (AdvanceAngle_4) bestimmt.

Die individuellen Zündwinkel 242 bis 248, die jeweils aus einem Vorgabe-Zündwinkel "(Default-Zündwinkel") und einem individuellen Offset-Wert bestehen, haben in Fig. 2 beispielhaft unterschiedliche, durch unterschiedliche Offset-Werte erzielte Längen bzw. Zeitdauern und dienen, wie oben erwähnt, zur Symmetrierung bzw. zur Amplitudenangleichung des Motorstroms.

Um zu bestimmen, ob der Motorstrom im Wesentlichen symmetrisch ist bzw. wird, wird der Motorstrom I_MEAS jeweils nach einer vorgegebenen Zeitdauer nach einer Änderung des Rotorstellungssignals, also nach jedem Polwechsel am Rotorstellungssensor 140, gemessen. Dementsprechend werden folgende Werte gemessen:

Für den 1. Pol (HCnt = 1) zum Zeitpunkt 222 ein Motorstrom I_MEAS(1);
für den 2. Pol (HCnt = 2) zum Zeitpunkt 224 ein Motorstrom I_MEAS(2);
für den 3. Pol (HCnt = 3) zum Zeitpunkt 226 ein Motorstrom I_MEAS(3);
für den 4. Pol (HCnt = 4) zum Zeitpunkt 228 ein Motorstrom I_MEAS(4).

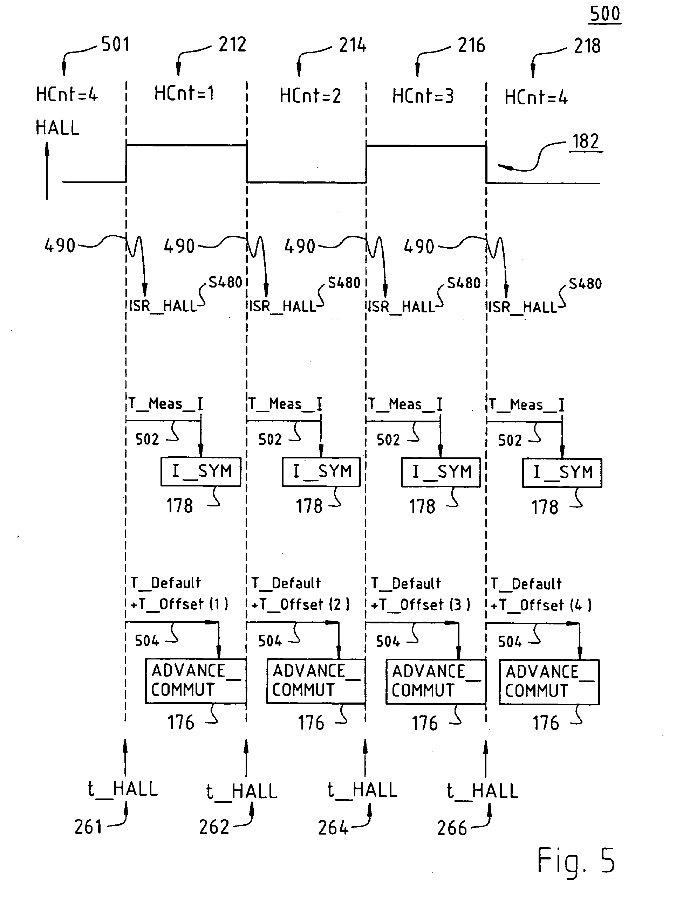

Der Strom I_MEAS wird gemessen, wenn nach einem Wechsel 261, 262, 264, 266 des Rotorstellungssignals 182 eine vorgegebene Zeitspanne T_MEAS_I abgelaufen ist, vgl. Fig. 5, wo diese Zeitspanne mit 502 bezeichnet ist.

Jeder gemessene Motorstrom wird mit dem zuvor gemessenen Motorstrom verglichen, um eine Abweichung von diesem zu ermitteln. Beispielsweise wird der Motorstrom I_MEAS(2) mit dem Motorstrom I_MEAS(1) verglichen, um eine Abweichung

$$A(1) = I\_MEAS(2) - I\_MEAS(1) \qquad\qquad (1)$$

zu bestimmen.

Der Motorstrom I_MEAS(3) wird mit dem Motorstrom I_MEAS(2) verglichen, um eine Abweichung

$$A(2) = I\_MEAS(3) - I\_MEAS(2) \qquad\qquad (2)$$

zu bestimmen, usw.

Dieser Vergleich findet in der Steuerroutine I_SYMM (Fig. 7) statt, und der Vergleich ist dort im Schritt S730 dargestellt. Je nach dem Resultat des Vergleichs wird entweder im Schritt S750 die Zeit T_Offset(HCnt) um einen vorgegebenen Wert vergrößert, oder sie wird im Schritt S770 um einen vorgegebenen Wert verkleinert.

Die Tatsache, dass eine Abweichung A(n) ermittelt wurde, bewirkt also, dass der Offset-Wert eines entsprechenden individuellen Zündwinkels - unter Berücksichtigung einer bereits erreichten Amplitudenangleichung - justiert, also nachgestellt, wird. Bevorzugt wird der Offset-Wert des Zündwinkels 242 unter Verwendung der Abweichung A(1) angepasst, der Offset-Wert des Zündwinkels 244 unter Verwendung der Abweichung A(2) usw. Die Bestimmung geeigneter Offset-Werte und der individuellen Zündwinkel 242 bis 248 wird bei Fig. 4 bis 8 ausführlich beschrieben.

**Fig. 3A** zeigt eine Darstellung 300 eines beispielhaften Verlaufs eines Motorstroms 320, der im Betrieb des ECM 120 bei einer Frühkommutierung ohne Symmetrierung der Ströme gemessen wurde. Diese Frühkommutierung wurde unter Verwendung eines Vorgabe-Zündwinkels durchgeführt, welcher zu Beginn der Stromsymmetrierung bei allen Polwechseln als Zündwinkel 342, 344, 346, 348 verwendet wird, da zu Beginn der Frühkommutierung alle Offset-Werte auf Null gesetzt werden.

Bei der Frühkommutierung werden beispielsweise zum Zeitpunkt 350 (Fig. 3A) die Halbleiterschalter 192, 198 der Endstufe 122 ausgeschaltet, und zum Zeitpunkt 352 werden die Halbleiterschalter 194, 196 eingeschaltet. Zum Zeitpunkt 262 wird dann durch eine Änderung des Rotorstellungssignals 182 ein Polwechsel erfasst, z.B. der Polwechsel vom ersten Pol (HCnt = 1) zum zweiten Pol (HCnt = 2) gem. Fig. 2.

Allerdings treten bei der Verwendung des Default-Zündwinkels zur einheitlichen Frühkommutierung Unsymmetrien im Motorstrom 320 auf, wie das Fig. 3A zeigt.

Wie beschrieben, ist zur Stromsymmetrierung die Messung von Momentanwerten für den Motorstrom 320 erforderlich. Deshalb wird zum Zeitpunkt 222 (Fig. 3A) ein Momentanwert 322 für den Motorstrom 320 gemessen, der den Motorstrom I_MEAS(1) darstellt. Analog hierzu wird zum Zeitpunkt 224 ein Momentanwert 324 bestimmt, der den Motorstrom I_MEAS(2) darstellt, usw. Wie Fig. 3A zeigt, ist bei diesem Beispiel der Momentanwert 324 größer als der Momentanwert 322. Somit kann eine Abweichung festgestellt werden, die größer als Null ist und zur Veränderung des entsprechenden Offset-Wertes für den Zündwinkel führt, wie nachfolgend beschrieben wird. Der Zündwinkel 342 kann dann, wie bei Fig. 2 beschrieben, für jeden Polwechsel durch einen jeweils zugeordneten Offset-Wert individualisiert werden.

**Fig. 3B** zeigt die Darstellung 360 eines beispielhaften Verlaufs des Motorstroms 320 bei einer Frühkommutierung des ECM 120 unter Verwendung der individuellen Zündwinkel 242, 244, 246, 248 von Fig. 2. Wie aus Fig. 3B ersichtlich, ist der Motorstrom 320 bei dieser Art der Kommutierung im Wesentlichen symmetrisch, beispielsweise hinsichtlich der Amplitude und/oder der Form. Dies führt zu einem ruhigeren Motorlauf und zu einem besseren Wirkungsgrad.

**Fig. 4** zeigt ein Flussdiagramm eines erfindungsgemäßen Verfahrens 400 zur Kommutierung des ECM 120, welches von der Steuerung 130 von Fig. 1 durchgeführt wird. Das Verfahren 400 (Fig. 4) wird bevorzugt als Hauptprogramm der Steuerung 130 in Form einer Endlosschleife durchgeführt, deren Ausführung bei der Inbetriebnahme des ECM 120 nach einer Initialisierung beginnt und nur bei einer Unterbrechung bzw. Beendigung des Betriebs wieder endet. Die Initialisierung der Endlosschleife erfolgt in Schritt S410, wobei die Steuerung 130 und ihre Ein- und Ausgänge, beispielsweise der A/D-Wandler 132, initialisiert werden.

In Schritt S420 wird überprüft, ob ein Funktionsbit FCT_I_SYM gesetzt ist, d.h. ob FCT_I_SYM = 1 ist. Falls das der Fall ist, ist eine Stromsymmetrierung des Motorstroms angefordert. In diesem Fall ruft das Hauptprogramm in Schritt S425 die Steuerroutine I_SYM 178 von Fig. 1 auf. Eine beispielhafte Steuerroutine I_SYM wird bei Fig. 7 beschrieben. Falls FCT_I_SYM = 0 ist, d.h. dieses Funktionsbit ist nicht gesetzt, ist keine Stromsymmetrierung angefordert und das Hauptprogramm fährt in Schritt S430 fort. Dies ist bei niedrigen Drehzahlen der Fall.

In Schritt S430 wird überprüft, ob ein Funktionsbit FCT_ADVANCE_COMMUT gesetzt ist. Falls FCT_ADVANCE_COMMUT = 1 ist, ist eine Frühkommutierung des Motorstroms angefordert. In diesem Fall ruft das Hauptprogramm in Schritt S435 die Steuerroutine ADVANCE_COMMUT 176 von Fig. 1 auf. Eine beispielhafte Steuerroutine ADVANCE_COMMUT wird bei Fig. 8 beschrieben. Falls FCT_ADVANCE_COMMUT = 0 ist, d.h. dieses Funktionsbit ist nicht gesetzt, ist keine Frühkommutierung angefordert und das Hauptprogramm fährt in Schritt S440 fort.

In Schritt S440 werden andere erforderliche Steuerroutinen ausgeführt, z.B. eine I/O-Routine, eine Alarmroutine oder eine 250ms-Routine. Letzteres ist eine Funktion, die alle 250 ms aufgerufen wird. Wenn der Motor blockiert ist, bestimmt diese Routine, wie lange dem ECM 120 Strom zugeführt wird, um einen erneuten Start zu versuchen, und wie lange anschließend der Strom abgeschaltet wird, wenn der Startversuch nicht erfolgreich war. Anschließend kehrt das Hauptprogramm zum Schritt S420 zurück.

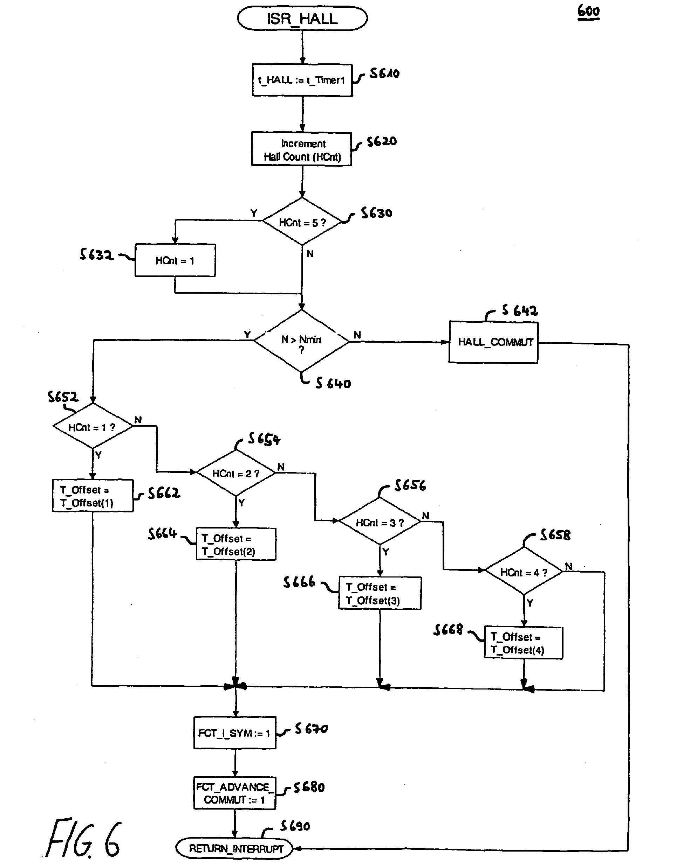

Die von dem Hauptprogramm (Fig. 4) ausgeführte Endlosschleife wird bei jeder Änderung des Rotorstellungssignals 182 von Fig. 1 bzw. Fig. 2, d.h. bei jedem Polwechsel am Rotorstellungssensor 140, von einer Interrupt Service Routine in Schritt S480 (ISR_HALL) unterbrochen. Die ISR_HALL wird durch ein Interrupt-Signal 490 (HALL-INTERRUPT) ausgelöst, welches z.B. bei jeder Änderung des Rotorstellungssignals 182 erzeugt wird. Eine beispielhafte Interrupt Service Routine ISR_HALL wird bei Fig. 6 beschrieben.

Ein beispielhafter erfindungsgemäßer Kommutierungsablauf unter Verwendung des Hauptprogramms wird bei Fig. 5 beschrieben.

**Fig. 5** zeigt ein Ablaufdiagramm 500, welches den Ablauf des Hauptprogramms 400 von Fig. 4 in der Vorrichtung 100 (Fig. 1) gemäß einer Ausführungsform der Erfindung illustriert. Das Ablaufdiagramm 500 umfasst das Rotorstellungssignal 182 von Fig. 2 mit den vier Hallsegmenten 212, 214, 216, 218, welche zu den Zeitpunkten 261, 262, 264 bzw. 266 beginnen. Ausgehend von den Zeitpunkten 261, 262, 264, 266 wird in Bezug auf jeden Polwechsel des Rotors 124 des ECM 120 ein individueller Kommutierungszeitpunkt bestimmt, wie weiter unten im Detail beschrieben wird.

Wie Fig. 5 zeigt, wird beim Übergang vom Hallsegment 501 zum Hallsegment 212 im Zeitpunkt 261 eine erste Änderung des Rotorstellungssignals 182 erfasst, die durch einen Polwechsel vom vierten Pol (HCnt = 4) zum ersten Pol (HCnt = 1) bewirkt wird. Bei diesem Polwechsel wird einer Zeitvariablen t_HALL der Zeitpunkt 261 zugewiesen und das HALL-INTERRUPT-Signal 490 wird erzeugt, wodurch die Interrupt Service Routine ISR_HALL gemäß Schritt S480 von Fig. 4 ausgelöst wird.

In der ISR_HALL (Fig. 6) wird in S670 das Funktionsbit FCT_I_SYM und in S680 das Funktionsbit FCT_ADVANCE_COMMUT zu 1 gesetzt, wenn gemäß S640 die Drehzahl des Rotors 124 eine vorgegebene Mindestdrehzahl bzw. eine untere Grenzdrehzahl überschreitet, die motorabhängig z.B. bei 450 rpm liegt. Eine beispielhafte Interrupt Service Routine ISR_HALL wird bei Fig. 6 beschrieben.

Für die weitere Beschreibung des Ablaufdiagramms 500 wird angenommen, dass die Drehzahl des Rotors 124 zum Zeitpunkt 261 über der unteren Grenzdrehzahl liegt und somit die Funktionsbits FCT_I_SYM und FCT_ADVANCE_COMMUT in der ISR_HALL zu 1 gesetzt werden. Dementsprechend wird nach Durchführung der ISR_HALL gemäß Schritt S425 des Hauptprogramms 400 (Fig. 4) die Steuerroutine 178 (I_SYM) und gemäß Schritt S435 die Steuerroutine 176 (ADVANCE_COMMUT) aufgerufen.

Die Steuerroutine 178 (I_SYM) wird, ausgehend vom Zeitpunkt t_HALL, nach Ablauf einer vorgegebenen Wartezeit 502 (T_Meas_I) aufgerufen. Eine beispielhafte Steuerroutine I_SYM wird bei Fig. 7 beschrieben. In dieser Routine 178 wird im Schritt S720 der augenblickliche Strom I_MEAS(HCnt) gemessen und digitalisiert.

Die Steuerroutine 176 (ADVANCE_COMMUT) wird, ebenfalls ausgehend vom Zeitpunkt t_HALL, nach Ablauf einer vorgegebenen Zeitdauer 504 (T_Default + T_Offset(1)) aufgerufen. Hierbei ist T_Default ein Default-Wert zur Einstellung des Zündwinkels für die Frühkommutierung, und T_Offset(1) ist ein Kommutierungs-Offset zur Individualisierung des Default-Wertes für den Polwechsel vom ersten Pol (HCnt = 1) zum zweiten Pol (HCnt = 2). (Der Wert T_Offset(1) wird vor Erreichen des Zeitpunkts 260 berechnet.) Eine beispielhafte Steuerroutine ADVANCE_COMMUT wird bei Fig. 8 beschrieben.

Der in Bezug auf das erste Hallsegment 212 beschriebene Ablauf wird anschließend für jedes der Hallsegmente 214, 216, 218 wiederholt. Hierbei wird der Variablen t_HALL zu Beginn des zweiten Hallsegments 214 der Zeitpunkt 262, zu Beginn des dritten Hallsegments 216 der Zeitpunkt 264 und zu Beginn des vierten Hallsegments 218 der Zeitpunkt 266 zugewiesen. Die vorgegebene Zeitdauer 504 wird im zweiten Hallsegment 214 durch T_Default + T_Offset(2), im dritten Hallsegment 216 durch T_Default + T_Offset(3) und im vierten Hallsegment 218 durch T_Default + T_Offset(4) festgelegt, wobei der entsprechende T_Offset-Wert jeweils einen Kommutierungs-Offset zur Individualisierung des Vorgabewertes für einen entsprechenden Polwechsel festlegt.

Wie Fig. 5 zeigt, werden die individuellen Kommutierungs-Offsets nach jeder mechanischen Umdrehung des Rotors 124 aktualisiert. Somit wird der Zeitpunkt der Frühkommutierung für jeden Polwechsel nach jeder Umdrehung des Rotors 124 in Abhängigkeit von einer bereits erzielten Amplitudenangleichung des Motorstroms bei den Bestromungsphasen des Strangs 126 aktualisiert. Dies ermöglicht eine iterative Symmetrierung des Motorstroms in den einzelnen Drehwinkelbereichen, vgl. Fig. 3B, und damit eine Verbesserung des Wirkungsgrads des ECM 120.

**Fig. 6** zeigt ein Flussdiagramm eines Verfahrens 600, mit dem die Interrupt Service Routine (ISR_HALL), welche in Schritt S480 von Fig. 4 ausgeführt wird, gemäß einer bevorzugten Ausführungsform der Erfindung realisiert wird.

Die Routine ISR_HALL beginnt in Schritt S610, in dem ein aktueller Zeitpunkt bzw. ein Momentanzeitwert t_Timer1 bestimmt wird. Der Wert t_Timer1 ist eine Zeitvariable, welche immer durch einen Momentanzeitwert festlegt wird. Dieser Momentanzeitwert kann beispielsweise unter Verwendung eines Zeitgebers ermittelt werden, welcher von der Steuerung 130 von Fig. 1 realisiert wird. Der zu Beginn der Ausführung der ISR_HALL ermittelte Momentanzeitwert t_Timer1 wird in Schritt S61 0 der Variablen t_HALL zugewiesen. Beispielsweise wird für den Fall, dass als Momentanzeitwert t_Timer1 der Zeitpunkt 261 gem. Fig. 5 bestimmt wird, dieser Zeitpunkt 261 der Variablen t_HALL zugewiesen.

In Schritt S620 wird der Wert HCnt eines Hallsegment-Zählers, welcher z.B. von der Steuerung 130 (Fig. 1) realisiert wird, inkrementiert. Der Wert HCnt des Hallsegment-Zählers dient zur Zuordnung eines zu Beginn der Durchführung der ISR_HALL erfassten Hallsegments zu einem entsprechenden Pol des Rotors 124 von Fig. 1. Beispielsweise erfolgt zum Zeitpunkt 261 der Fig. 5 der Polwechsel vom vierten Pol zum ersten Pol des Rotors 124. Somit ist vor dem Polwechsel HCnt = 4 und wird dementsprechend in Schritt S620 von HCnt = 4 zu HCnt = 5 inkrementiert.

In dem in den Fig. 1 bis 5 dargestellten Ausführungsbeispiel wird davon ausgegangen, dass der Rotor 124 vierpolig ist, d.h. dass er vier Magnetpole 183, 186, 188, 189 hat. Da jedem Pol ein bestimmtes Hallsegment zugewiesen wird, kann HCnt im vorliegenden Beispiel nur ganzzahlige Werte von 1 bis 4 annehmen. Deshalb wird in Schritt S630 überprüft, ob HCnt = 5 ist. Falls HCnt kleiner als 5 ist, fährt die ISR_HALL in Schritt S640 fort. Da im vorliegenden Beispiel HCnt = 5 ist, wird HCnt in Schritt S632 zu HCnt = 1 gesetzt, bevor die ISR_HALL in Schritt S640 fortfährt. Dadurch wird berücksichtigt, dass das aktuelle Hallsegment durch Erfassung des ersten Pols am Rotorstellungssensor 140 von Fig. 1 erzeugt wird. Dementsprechend ergibt sich, dass bei der nächsten Kommutierung des Motorstroms der Polwechsel vom ersten Pol zum zweiten Pol erfolgt. Der Zeitpunkt dieser nächsten Kommutierung ist gemäß Fig. 5 durch die vorgegebene Zeitdauer 504 im ersten Hallsegment 212, d.h. durch T_Default + T_Offset(1) festgelegt.

In Schritt S640 wird bestimmt, ob die Drehzahl N des Rotors 124 über der unteren Grenzdrehzahl Nmin liegt. Falls N ≤ Nmin ist, wird die nächste Kommutierung des Motorstroms im Strang 126 von Fig. 1 in Schritt S642 auf gebräuchliche Art durchgeführt, d.h. es erfolgt keine Frühkommutierung, sondern die Kommutierung wird direkt durch das Hallsignal 182 gesteuert. Falls bereits N > Nmin ist, erfolgt bei der nächsten Kommutierung eine Frühkommutierung mit einem individuellen Zündwinkel, und die ISR_HALL fährt in Schritt S652 fort.

In Schritt S652 wird überprüft, ob HCnt = 1 ist. Falls HCnt = 1 ist, fährt die ISR_HALL in Schritt S662 fort. Ansonsten wird in Schritt S654 überprüft, ob HCnt = 2 ist. Falls in Schritt S654 HCnt = 2 ist, fährt die ISR_HALL in Schritt S664 fort. Ansonsten wird in Schritt S656 überprüft, ob HCnt = 3 ist. Falls Ja, fährt die ISR_HALL in Schritt S666 fort. Ansonsten wird in Schritt S658 überprüft, ob HCnt = 4 ist. Falls in Schritt S658 bestimmt wird, dass HCnt = 4 ist, fährt die ISR_HALL in Schritt S668 fort.

In Schritt S662 wird einem Kommutierungs-Offset T_Offset der Wert des Kommutierungs-Offsets T_Offset(1) zur Beeinflussung des Default-Wertes T_Default zugewiesen, um den Zeitpunkt der Frühkommutierung vor dem Polwechsel vom ersten Pol zum zweiten Pol, welcher gem. Fig. 5 zum Zeitpunkt 262 erfolgt, individuell zu verändern. In Schritt S664 wird T_Offset der Wert T_Offset(2) zugewiesen, mit dem der Zeitpunkt der Frühkommutierung vor dem Polwechsel vom zweiten Pol zum dritten Pol, welcher gem. Fig. 5 zum Zeitpunkt 264 erfolgt, individualisiert wird. In Schritt S666 wird T_Offset der Wert T_Offset(3) zugewiesen, mit dem der Zeitpunkt der Frühkommutierung vor dem Polwechsel vom dritten Pol zum vierten Pol, welcher gem. Fig. 5 zum Zeitpunkt 266 erfolgt, individualisiert wird. In Schritt S668 wird T_Offset der Wert T_Offset(4) zugewiesen, mit dem der Zeitpunkt der Frühkommutierung vor dem Polwechsel vom vierten Pol zum ersten Pol, welcher gem. Fig. 5 zum Zeitpunkt 261 erfolgt, individualisiert wird.

In Schritt S670 wird das Funktionsbit FCT_I_SYM zu 1 gesetzt, um das Hauptprogramm von Fig. 4 zu veranlassen, in Schritt S425 die Steuerroutine I_SYM auszuführen, um den jeweiligen zugewiesenen Kommutierungs-Offset für den Default-Wert des Zündwinkels zu aktualisieren. Eine beispielhafte Steuerroutine I_SYM wird bei Fig. 7 beschrieben.

In Schritt S680 wird das Funktionsbit FCT_ADVANCE_COMMUT auf 1 gesetzt, um das Hauptprogramm von Fig. 4 zu veranlassen, in Schritt S435 die Steuerroutine ADVANCE_COMMUT auszuführen, um die Frühkommutierung mit dem jeweils ermittelten, individuellen Zündwinkel zu bewirken. Eine beispielhafte Steuerroutine ADVANCE_COMMUT wird bei Fig. 8 beschrieben.

Die ISR_HALL (Fig. 6) wird dann in Schritt S690 beendet, und die Ausführung des Hauptprogramms von Fig. 4 wird wieder aufgenommen.

**Fig. 7** zeigt ein Flussdiagramm eines Verfahrens 700, mit dem die Steuerroutine 178 (I_SYM) von Fig. 1 gemäß einer bevorzugten Ausführungsform der Erfindung realisiert wird. Wie bei Fig. 4 beschrieben ist, wird diese Steuerroutine I_SYM in Schritt S425 des Hauptprogramms von Fig. 4 ausgeführt, wenn das Funktionsbit FCT_I_SYM zu 1 gesetzt ist.

Die Steuerroutine I_SYM beginnt mit Schritt S71 0, in dem (wie oben bei FIG. 6 beschrieben) ein aktueller Zeitpunkt bzw. ein Momentanzeitwert für die Variable t_Timer1 bestimmt wird, welcher mit einem Zeitwert verglichen wird, der aus t_HALL und der vorgegebenen Wartezeit T_Meas_I (Fig. 5) gebildet wird. Somit wird in Schritt S710 überprüft, ob in einem vorgegebenen Hallsegment HCnt seit dem Polwechsel zum Zeitpunkt t_HALL zu Beginn dieses Hallsegments HCnt die vorgegebene Wartezeit T_Meas_I abgelaufen ist. Falls die vorgegebene Wartezeit T_Meas_I noch nicht abgelaufen ist (d.h. t_Timer1 ≤ t_HALL + T_Meas_I), endet die Steuerroutine in Schritt S790. Ansonsten fährt die Steuerroutine in Schritt S720 fort.

In Schritt S720 wird, wie bei Fig. 1 beschrieben, eine Messung des Motorstroms I_MEAS durchgeführt. Hierbei wird für das aktuelle Hallsegment HCnt der Motorstrom I_MEAS(Hcnt) ermittelt, also z.B. der Motorstrom I_MEAS(1) für das Hallsegment 1, falls dieses aktuell ist.

In Schritt S730 wird der im aktuellen Hallsegment HCnt gemessene Motorstrom I_MEAS(HCnt) mit dem im zuvor erfassten Hallsegment HCnt-1 gemessenen Motorstrom I_MEAS(HCnt-1) verglichen. Hierbei wird eine Abweichung des Motorstroms I_MEAS(HCnt) von dem Motorstrom I_MEAS(HCnt-1) bestimmt. Falls diese Abweichung kleiner als Null ist, d.h. I_MEAS(HCnt) < I_MEAS(HCnt-1), fährt die Steuerroutine I_SYM in Schritt S760 fort. Sonst fährt sie im Schritt S740 fort.

In Schritt S760 wird bestimmt, ob der Kommutierungs-Offset T_Offset(HCnt-1) größer als ein vorgegebener unterer Grenzwert (hier Null) ist. Dieser untere Grenzwert kann anwendungsspezifisch vorgegeben werden. Falls der Kommutierungs-Offset T_Offset(HCnt-1) größer als der untere Grenzwert ist, wird T_Offset(HCnt-1) in Schritt S770 bevorzugt um den Wert 1 dekrementiert, bevor die Steuerroutine I_SYM in Schritt S780 fortfährt. Ansonsten wird keine Dekrementierung des Kommutierungs-Offsets durchgeführt, so dass die Steuerroutine I_SYM nach Schritt S760 in Schritt S780 fortfährt. Somit kann vermieden werden, dass der untere Grenzwert für den Kommutierungs-Offset T_Offset(HCnt-1) durch die Dekrementierung in Schritt S770 unterschritten wird (Vermeidung eines Underflow).

In Schritt S740 wird geprüft, ob der Kommutierungs-Offset T_Offset(HCnt-1) größer als ein vorgegebener oberer Grenzwert ist. Dieser obere Grenzwert kann anwendungsspezifisch vorgegeben werden und ist in Fig. 7 beispielhaft zu 200 gesetzt. Falls der Kommutierungs-Offset T_Offset(HCnt-1) nicht größer ist als der obere Grenzwert (d.h. T_Offset(HCnt-1) ≤ 200), wird T_Offset(HCnt-1) in Schritt S750 bevorzugt um den Wert 1 inkrementiert, bevor die Steuerroutine I_SYM in Schritt S780 fortfährt. Andernfalls wird keine Inkrementierung des Kommutierungs-Offsets durchgeführt, sodass die Steuerroutine I_SYM nach Schritt S740 in Schritt S780 fortfährt. So wird vermieden, dass durch eine Inkrementierung im Schritt S750 der obere Grenzwert für den Kommutierungs-Offset T_Offset(Hcnt-1) überschritten wird, wodurch ein Overflow auftreten würde. Die Begrenzung des Kommutierungs-Offsets nach oben und nach unten stellt sicher, dass dieser keine ungeeigneten Werte annimmt.

In Schritt S780 wird das Funktionsbit FCT_I_SYM zu Null zurückgesetzt, bevor die Steuerroutine I_SYM von Fig. 7 in Schritt S790 endet und das Hauptprogramm von Fig. 4 wie oben beschrieben bei Schritt S430 fortfährt. Dadurch, dass FCT_I_SYM in S780 zurückgesetzt wird, kann ein weiterer Aufruf der Steuerroutine I_SYM durch das Hauptprogramm (Fig. 4) bis zur nächsten Ausführung der ISR_HALL (Fig. 6) verhindert werden. Somit wird eine zweite oder weitere Inkrementierung oder Dekrementierung ein und desselben Kommutierungs-Offsets innerhalb eines einzelnen Hallsegments, d.h. vor Auftreten eines nächsten Polwechsels, verhindert.

Es wird darauf hingewiesen, dass in der Steuerroutine I_SYM (Fig. 7) wie beschrieben im aktuellen Hallsegment HCnt der Kommutierungs-Offset T_Offset(HCnt-1) aktualisiert wird. Dieser Kommutierungs-Offset dient zur Individualisierung des Zündwinkels beim Polwechsel vom Hallsegment HCnt-1 zum Hallsegment HCnt. Dementsprechend wird der aktualisierte Kommutierungs-Offset T_Offset(HCnt-1) erst nach einer im Wesentlichen vollständigen mechanischen Umdrehung des Rotors 124 zur Individualisierung des Zündwinkels bei der Frühkommutierung vor dem nächsten Auftreten dieses Polwechsels verwendet.

**Fig. 8** zeigt ein Flussdiagramm eines Verfahrens 800, mit dem die Steuerroutine 176 (ADVANCE_COMMUT) von Fig. 1 gemäß einer bevorzugten Ausführungsform der Erfindung realisiert wird. Wie oben bei Fig. 4 beschrieben, wird diese Steuerroutine ADVANCE_COMMUT bevorzugt im Schritt S435 des Hauptprogramms (Fig. 4) ausgeführt, wenn das Funktionsbit FCT_ADVANCE_COMMUT = 1 ist.

Die Routine ADVANCE_COMMUT beginnt mit Schritt S810, in dem, wie bei FIG. 6 beschrieben, ein aktueller Zeitpunkt bzw. ein Momentanzeitwert für die Variable t_Timer1 bestimmt wird, welcher mit einem Zeitwert verglichen wird, der aus t_HALL, dem Default-Wert T_Default für den Zündwinkel zur Frühkommutierung und dem Kommutierungs-Offset T_Offset(HCnt) gebildet wird. Somit wird in Schritt S810 überprüft, ob in einem entsprechenden Hallsegment HCnt seit dem Polwechsel zum Zeitpunkt t_HALL zu Beginn dieses Hallsegments HCnt die vorgegebene Zeitdauer T_Default + T_Offset(HCnt) bis zur Auslösung der Frühkommutierung abgelaufen ist. Falls die vorgegebene Zeitdauer noch nicht abgelaufen ist (d.h. t_Timer1 ≤ t_HALL + T_Default + T_Offset(HCnt)), endet die Routine ADVANCE_COMMUT in Schritt S840. Ansonsten fährt die Routine in Schritt S820 fort.

In Schritt S820 wird der Motorstrom im Strang 126 wie oben bei Fig. 2 beschrieben kommutiert. In Schritt S830 wird dann das Funktionsbit FCT_ADVANCE_COMMUT zu FCT_ADVANCE_COMMUT = 0 zurückgesetzt, bevor die Steuerroutine ADVANCE_COMMUT in Schritt S840 endet und das Hauptprogramm von Fig. 4 wie oben beschrieben bei Schritt S440 fortfährt. Dadurch, dass FCT_ADVANCE_COMMUT in Schritt S830 zurückgesetzt wird, kann ein weiterer Aufruf der Steuerroutine ADVANCE_COMMUT durch das Hauptprogramm (Fig. 4) bis zur nächsten Ausführung der Routine ISR_HALL (Fig. 6) verhindert werden. Somit wird eine zweite oder weitere Kommutierung innerhalb eines einzelnen Hallsegments, d.h. vor Auftreten des nächsten Polwechsels, verhindert.

Erfindungsgemäß können Unsymmetrien im Motorstrom des ECM 120 während des Betriebs unter Verwendung geeigneter, individueller Zündwinkel mit entsprechenden individuellen Kommutierungs-Offsets kompensiert werden, wobei ungünstige Randbedingungen und Betriebsparameter einfach und schnell ausgeglichen werden.

Durch die stufenweise Inkrementierung/Dekrementierung dieser individuellen Kommutierungs-Offsets wird hierbei eine kontinuierliche Amplitudenangleichung des Motorstroms in unterschiedlichen Bestromungsphasen erreicht, d.h. dieser Vorgang erstreckt sich ggf. über eine größere Zahl von Umdrehungen des Rotors 124, besonders nach dem Einschalten des Motors 120.

Naturgemäß sind im Rahmen der vorliegenden Erfindung vielfache Abwandlungen und Modifikationen möglich.

So kann beispielsweise der Aufruf der Routine I_SYM 178 (Fig. 7) nach der Zeit T_Meas_I und/oder der Aufruf der Routine ADVANCE_COMMUT (Fig. 8) nach der Zeit T_Default + T_Offset(HCnt) durch einen auf die entsprechende Zeit gesetzten Timer und ggf. einen durch den Timer ausgelösten Timer-Interrupt gesteuert werden. Dies vermeidet das wiederholte Überprüfen (Polling), ob die entsprechende Zeit bereits abgelaufen ist (S710 in Fig. 7 und S810 in Fig. 8).

Anstelle der Addition eines individualisierenden Werts T_Offset(HCnt) zu einem Grundwert T_Default kann auch für jeden Rotorpol eine Variable T_Commut(HCnt) verwendet werden, wobei sämtliche Werte T_Commut(HCnt) bei der Initialisierung bspw. auf den Wert T_Default gesetzt werden. Die Symmetrierung erfolgt dann durch eine Anpassung der jeweiligen Werte T_Commut(Hcnt).

Solche und ähnliche Modifikationen liegen im Rahmen des fachmännischen Handelns.

**Patentansprüche**

1.  Verfahren zur Kommutierung eines elektronisch kommutierten Motors (120), welcher einen Rotor (124), mindestens einen Strang (126), eine Endstufe (122) zur Beeinflussung eines durch den mindestens einen Strang (126) fließenden Motorstrom (320), und einen Rotorstellungssensor (140) zur Erzeugung eines Rotorstellungssignals (182) aufweist, welches Verfahren folgende Schritte aufweist:

    A) Nach einer Änderung des Rotorstellungssignals (182), welche einem Polwechsel zugeordnet ist, der auf eine Kommutierung des Motorstroms (320) durch den mindestens einen Strang (126) folgt und nachfolgend als erster Polwechsel bezeichnet wird, wird ein erster Wert (I_MEAS(HCnt-1)) des Motorstroms ermittelt;

    B) nach Ablauf einer vorgegebenen Zeitdauer (T_Default + T_Offset(HCnt-1)) nach dem ersten Polwechsel wird eine neue Kommutierung durchgeführt;

    C) nach einer Änderung des Rotorstellungssignals (182), welche auf die neue Kommutierung folgt und einem Polwechsel zugeordnet ist, der nachfolgend als zweiter Polwechsel bezeichnet wird, wird ein zweiter Wert für den Motorstrom (I_MEAS(HCnt)) ermittelt;

    D) abhängig vom Unterschied zwischen erstem Wert (I_MEAS(HCnt-1)) und zweitem Wert (I_MEAS(HCnt) wird der Wert für die vorgegebene Zeitdauer (T_Default + T_Offset(HCnt-1)) verändert, um bei einer Verwendung dieses veränderten Wertes eine Angleichung von erstem Wert für den Motorstrom und zweitem Wert für den Motorstrom zu bewirken.

2.  Verfahren nach Anspruch 1, bei welchem nach Erreichen einer Mindestdrehzahl (Nmin) des Motors die Schritte A) bis D) ständig wiederholt werden.

3.  Verfahren nach Anspruch 1, oder 2, bei welchem im Schritt D) durch die Veränderung des Werts für die vorgegebene Zeitdauer (T_Default + T_Offset(HCnt-1)) der Zeitpunkt der neuen Kommutierung nach einer nächsten Erfassung des ersten Polwechsels geändert wird, um eine Amplitudenangleichung des Motorstroms (320) in verschiedenen Drehwinkelbereichen (212, 214, 216, 218) des mindestens einen Strangs (126) zu bewirken.

4.  Verfahren nach einem der Ansprüche 1 bis 3, bei welchem die vorgegebene Zeitdauer (T_Default + T_Offset(HCnt-1)) derart festgelegt wird, dass oberhalb einer vorgegebenen Mindestdrehzahl (Nmin) jede Kommutierung des Motorstroms eine Frühkommutierung ist.

5.  Verfahren nach einem der vorhergehenden Ansprüche, bei welchem nach jedem Polwechsel nach Ablauf der zugeordneten vorgegebenen Zeitdauer (T_Default + T_Offset(HCnt-1)) eine Kommutierung des Motorstroms durchgeführt wird, wobei für die Ermittlung der vorgegebenen Zeitdauer ein Vorgabewert (Fig. 5: T_Default) als Ausgangswert verwendet wird, der um einen Kommutierungs-Offset (T_Offset(HCnt-1)) erhöht wird.

6.  Verfahren nach Anspruch 4, bei welchem der Vorgabewert (T_Default) in einem dem Motor zugeordneten nichtflüchtigen Speicherelement (131) gespeichert wird.

7. Verfahren nach einem der vorhergehenden Ansprüche, bei welchem der Vorgabewert (T_Default) bei einer Kalibrierung des Motors ermittelt wird.

8. Verfahren nach einem der vorhergehenden Ansprüche, bei welchem im Schritt D) der erste Wert des Motorstroms (I_MEAS(HCnt-1)) mit dem zweiten Wert (I_MEAS(HCnt)) verglichen wird (Fig. 7: S730), um eine Abweichung des Motorstroms nach dem zweiten Polwechsel von dem Motorstrom nach dem ersten Polwechsel zu ermitteln, und in Abhängigkeit von der ermittelten Abweichung (Fig.7: S730) die vorgegebene Zeitdauer (T_Default + T_Offset (HCnt-1)) verändert wird.

9. Verfahren nach Anspruch 8, bei welchem die vorgegebene Zeitdauer vergrößert wird (Fig. 7: S750), falls der zweite Wert (I_MEAS(HCnt)) größer ist als der erste Wert (I_MEAS(HCnt-1)).

10. Verfahren nach Anspruch 9, bei welchem die Vergrößerung durch Inkrementierung um einen Festwert erfolgt (Fig. 7: S750).

11. Verfahren nach Anspruch 9 oder 10, bei welchem die Vergrößerung derart erfolgt, dass für den jeweiligen Kommutierungs-Offset (T_Offset(HCnt-1)) ein vorgegebener oberer Grenzwert nicht überschritten wird (Fig. 7: S740).

12. Verfahren nach Anspruch 8, bei welchem die vorgegebene Zeitdauer (T_Default + T_Offset(HCnt-1)) verringert wird, falls der zweite Wert kleiner ist als der erste Wert (Fig. 7: S770).

13. Verfahren nach Anspruch 12, bei welchem die Verringerung durch eine Dekrementierung um einen Festwert erfolgt (Fig. 7: S770).

14. Verfahren nach Anspruch 13, bei welchem die Dekrementierung derart erfolgt, dass ein für den Kommutierungs-Offset vorgegebener unterer Grenzwert nicht unterschritten wird (Fig. 7: S760).

15. Verfahren nach einem der Ansprüche 8 bis 13, bei welchem der Kommutierungs-Offset (T_Offset(HCnt-1)) nur dann ermittelt wird, wenn der Rotor (124) sich zumindest mit einer vorgegebenen Mindestdrehzahl (Nmin) dreht.

16. Verfahren nach einem der Ansprüche 8 bis 15, bei welchem der Kommutierungs-Offset (T_Offset(HCnt-1)) nach jeder Umdrehung des Rotors (124) aktualisiert wird.

17. Verfahren nach einem der vorhergehenden Ansprüche, bei welchem der erste Wert des Motorstroms (I_MEAS (HCnt-1)) bei Schritt A) nach Ablauf einer vorgegebenen Wartezeit (Fig. 2: t_MEAS)nach der ersten Änderung des Rotorstellungssignals (261, 262, 263, 264) ermittelt wird.

18. Verfahren nach einem der vorhergehenden Ansprüche, bei welchem zumindest die Schritte C) und D) nur dann ausgeführt werden, wenn eine Symmetrierung des Motorstroms (320) angefordert (Fig. 6: S670) wird.

19. Verfahren nach Anspruch 18, bei welchem eine Interrupt-Serviceroutine (152; ISR_HALL) vorgesehen ist, durch welche im Betrieb die Symmetrierung des Motorstroms angefordert wird (Fig. 6: S670).

20. Elektronisch kommutierter Motor, welcher aufweist:

Einen permanentmagnetischen Rotor (124) mit mindestens zwei Rotorpolen (183, 186, 188, 189;
einen Stator (125) mit mindestens einem Strang (126);
eine Endstufe (122) zur Beeinflussung eines durch den mindestens einen Strang (126) fließenden Stroms (320);
einen von der Stellung des Rotors (124) gesteuerten Rotorstellungssensor (140) zur Erzeugung eines Rotorstellungssignals (182);
eine Steuerschaltung (130), welche dem Motor (120) zugeordnet und dazu ausgebildet ist, folgende Schritte zwecks Vergleichmäßigung des Motorstroms (320) auszuführen:

A) Nach einer Änderung (261, 262, 263, 264) des Rotorstellungssignals (182), welche einem Wechsel (t_HALL) zwischen zwei Rotorpolen zugeordnet ist und auf eine Kommutierung des Stroms (320) durch den mindestens einen Strang (126) folgt, welcher Wechsel nachfolgend als erster Polwechsel bezeichnet wird, wird ein erster Wert (I_MEAS(HCnt-1)) des Motorstroms (320) ermittelt;
B) Nach Ablauf einer vorgegebenen Zeitdauer (T_Default+T_Offset(HCnt-1)) nach dem ersten Polwechsel wird eine neue Kommutierung durchgeführt;

C) Nach einer Änderung (261, 262, 263, 264) des Rotorstellungssignals (182), welche auf die neue Kommutierung folgt und einem Wechsel zwischen zwei Rotorpolen zugeordnet ist, der nachfolgend als zweiter Polwechsel bezeichnet wird, wird ein zweiter Wert für den Motorstrom (I_MEAS(HCnt)) ermittelt;

D) abhängig vom Unterschied zwischen erstem Wert (I_MEAS(HCnt-1)) und zweitem Wert (I_MEAS(HCnt) wird der Wert für die vorgegebene Zeitdauer (T_Default + T_Offset(HCnt-1)) verändert, um bei einer Benutzung dieses veränderten Wertes eine Angleichung von erstem Wert für den Motorstrom und zweitem Wert für den Motorstrom zu bewirken.

## Claims

1. Method for commutation of an electronically commutated motor (120), having a rotor (124), at least one phase (126), an output stage (122) to influence a motor current (320) which flows through the at least one phase (126), and a rotor position sensor (140) to generate a rotor position signal (182), said method having the following steps:

   A) after a change of the rotor position signal (182), said change being assigned to a pole reversal which follows a commutation of the motor current (320) through the at least one phase (126) and is called the first pole reversal below, a first value (I_MEAS(HCnt-1)) of the motor current is determined;

   B) after expiry of a predetermined duration (T_Default+T_Offset(HCnt-1)) after the first pole reversal, a new commutation is carried out;

   C) after a change of the rotor position signal (182), said change following the new commutation and being assigned to a pole reversal which is called the second pole reversal below, a second value for the motor current (I_MEAS(HCnt)) is determined;

   D) depending on the difference between the first value (I_MEAS(HCnt-1)) and the second value (I_MEAS(HCnt)), the value for the predetermined duration (T_Default+T_Offset(HCnt-1)) is changed, to cause an equalisation of the first value for the motor current and the second value for the motor current when this changed value is used.

2. Method according to Claim 1, wherein after a minimum rotational speed (Nmin) of the motor is reached, Steps A) to D) are constantly repeated.

3. Method according to Claim 1 or 2, wherein in Step D), because of the change of the value for the predetermined duration (T_Default+T_Offset(HCnt-1)), the time of the new commutation after a next capture of the first pole reversal is changed, to cause an amplitude equalisation of the motor current (320) in different ranges of angle of rotation (212, 214, 216, 218) of the at least one phase (126).

4. Method according to one of Claims 1 to 3, wherein the predetermined duration (T_Default+T_Offset(HCnt-1)) is defined in such a way that above a predetermined minimum rotational speed (Nmin), every commutation of the motor current is an early commutation.

5. Method according to one of the preceding claims, wherein after every pole reversal after the expiry of the assigned predetermined duration (T_Default+T_Offset(HCnt-1)), a commutation of the motor current is carried out, a default value (Fig. 5: T_Default) being used as the initial value, which is increased by a commutation offset (T_Offset(HCnt-1)) for determining the predetermined duration.

6. Method according to Claim 4, wherein the default value (T_Default) is stored in a non-volatile memory element (131) which is assigned to the motor.

7. Method according to one of the preceding claims, wherein the default value (T_Default) is determined when the motor is calibrated.

8. Method according to one of the preceding claims, wherein in Step D), the first value of the motor current (I_MEAS(HCnt-1)) is compared with the second value (I_MEAS(HCnt)) (Fig. 7: S730), to determine a difference of the motor current after the second pole reversal from the motor current after the first pole reversal, and depending on the determined difference (Fig. 7: S730), the predetermined duration (T_Default+T_Offset(HCnt-1)) is changed.

9. Method according to Claim 8, wherein the predetermined duration is increased (Fig. 7: S750) if the second value (I_MEAS(HCnt)) is greater than the first value (I_MEAS(HCnt-1)).

10. Method according to Claim 9, wherein the increase is by incrementation by a fixed value (Fig. 7: S750).

11. Method according to Claim 9 or 10, wherein the increase takes place in such a way that for the relevant commutation offset (T_Offset(HCnt-1)), a predetermined upper limit is not overshot (Fig. 7: S740).

12. Method according to Claim 8, wherein the predetermined duration (T_Default+T_Offset(HCnt-1)) is decreased if the second value is less than the first value (Fig. 7: S770).

13. Method according to Claim 12, wherein the decrease is by decrementation by a fixed value (Fig. 7: S770).

14. Method according to Claim 13, wherein the decrementation takes place in such a way that a predetermined lower limit for the commutation offset is not undershot (Fig. 7: S760).

15. Method according to one of Claims 8 to 13, wherein the commutation offset (T_Offset(HCnt-1)) is determined only when the rotor (124) is rotating at least at a predetermined minimum rotational speed (Nmin).

16. Method according to one of Claims 8 to 15, wherein the commutation offset (T_Offset(HCnt-1)) is updated after every rotation of the rotor (124).

17. Method according to one of the preceding claims, wherein the first value of the motor current (I_MEAS(HCnt-1)) is determined at Step A) after expiry of a predetermined waiting time (Fig. 2: t_MEAS) after the first change of the rotor position signal (261, 262, 263, 264).

18. Method according to one of the preceding claims, wherein at least Steps C) and D) are executed only if balancing of the engine current (320) is required (Fig. 6: S670).

19. Method according to Claim 18, wherein an interrupt service routine (152; ISR_HALL), by which balancing of the engine current is requested in operation (Fig. 6: S670), is provided.

20. Electronically commutated motor, having:

   a permanently magnetic rotor (124) with at least two rotor poles (183, 186, 188, 189);
   a stator (125) with at least one phase (126);
   an output stage (122) to influence a current (320) which flows through the at least one phase (126):

      a rotor position sensor (140) which is controlled by the position of the rotor (124), to generate a rotor position signal (182);
      a control circuit (130), which is assigned to the motor (120), and is of a form to execute the following steps for the purpose of evening out the motor current (320);

         A) after a change (261, 262, 263, 264) of the rotor position signal (182), said change being assigned to a reversal (t_HALL) between two rotor poles and following a commutation of the current (320) through the at least one phase (126), said reversal being called the first pole reversal below, a first value (I_MEAS(HCnt-1)) of the motor current (320) is determined;
         B) after expiry of a predetermined duration (T_Default+T_Offset(HCnt-1)) after the first pole reversal, a new commutation is carried out;
         C) after a change (261, 262, 263, 264) of the rotor position signal (182), said change following the new commutation and being assigned to a pole reversal which is called the second pole reversal below, a second value for the motor current (I_MEAS(HCnt)) is determined;
         D) depending on the difference between the first value (I_MEAS(HCnt-1)) and the second value (I_MEAS(HCnt)), the value for the predetermined duration (T_Default+T_Offset(HCnt-1)) is changed, to cause an equalisation of the first value for the motor current and the second value for the motor current when this changed value is used.

**Revendications**

1. Procédé pour commuter un moteur à commutation électronique (120) qui présente un rotor (124), au moins une phase (126), un étage final (122) pour influencer un courant de moteur (320) circulant à travers ladite au moins une phase (126), et un capteur de position de rotor (140) pour générer un signal de position de rotor (182), lequel procédé comporte les étapes suivantes :

   A) après un changement du signal de position de rotor (182) qui est associé à un changement de polarité qui succède à une commutation du courant de moteur (320) à travers ladite au moins une phase (126) et qui est désigné ci-après par premier changement de polarité, une première valeur (I_MEAS(HCnt-1)) du courant de moteur est déterminée ;
   B) à l'expiration d'une durée prédéfinie (T_Default + T_Offset(HCnt-1)) après le premier changement de polarité, une nouvelle commutation est exécutée ;
   C) après un changement du signal de position de rotor (182) qui succède à la nouvelle commutation et qui est associé à un changement de polarité qui est désigné ci-après par deuxième changement de polarité, une deuxième valeur du courant de moteur (I_MEAS(HCnt)) est déterminée ;
   D) en fonction de la différence entre première valeur (I_MEAS(HCnt-1)) et deuxième valeur (I_MEAS(Hcnt), la valeur de la durée prédéfinie (T_Default + T_Offset(HCnt-1)) est modifiée pour, lors d'une utilisation de cette valeur modifiée, entraîner une égalisation de la première valeur du courant de moteur et de la deuxième valeur du courant de moteur.

2. Procédé selon la revendication 1, dans lequel, après qu'une vitesse de rotation minimale (Nmin) du moteur a été atteinte, les étapes A) à D) sont constamment répétées.

3. Procédé selon la revendication 1 ou 2, dans lequel, à l'étape D), par le changement de la valeur de la durée prédéfinie (T_Default + T_Offset(HCnt-1)), l'instant de la nouvelle commutation après une prochaine saisie du premier changement de polarité est modifié pour entraîner une égalisation d'amplitude du courant de moteur (320) dans différents secteurs d'angles de rotation (212, 214, 216, 218) de ladite au moins une phase (126).

4. Procédé selon l'une des revendications 1 à 3, dans lequel la durée prédéfinie (T_Default + T_Offset(HCnt-1)) est définie de façon qu'au-dessus d'une vitesse de rotation minimale (Nmin) prédéfinie, chaque commutation du courant de moteur est une commutation avancée.

5. Procédé selon l'une des revendications précédentes, dans lequel après chaque changement de polarité, à l'expiration de la durée prédéfinie associée (T_Default + T_Offset(HCnt-1)), une commutation du courant de moteur est exécutée, une valeur par défaut (fig. 5 : T_Default) étant utilisée comme valeur de départ pour la détermination de la durée prédéfinie et augmentée d'un décalage de commutation (T_Offset(HCnt-1)).

6. Procédé selon la revendication 4, dans lequel la valeur par défaut (T_Default) est stockée dans un élément de mémoire non volatile (131) associé au moteur.

7. Procédé selon l'une des revendications précédentes, dans lequel la valeur par défaut (T_Default) est déterminée lors d'un calibrage du moteur.

8. Procédé selon l'une des revendications précédentes, dans lequel à l'étape D), la première valeur du courant de moteur (I_MEAS(HCnt-1)) est comparée avec la deuxième valeur (I_MEAS(HCnt)) (fig. 7 : S730) pour déterminer une divergence du courant de moteur après le deuxième changement de polarité du courant de moteur après le premier changement de polarité,
   et, en fonction de la divergence déterminée (fig. 7 : S730), la durée prédéfinie (T_Default + T_Offset(HCnt-1)) est modifiée.

9. Procédé selon la revendication 8, dans lequel la durée prédéfinie est augmentée (fig. 7 : S750) si la deuxième valeur (I_MEAS(Hcnt)) est plus grande que la première valeur (I_MEAS(HCnt-1)).

10. Procédé selon la revendication 9, dans lequel l'augmentation est réalisée par incrémentation d'une valeur fixe (fig. 7 : S750).

11. Procédé selon la revendication 9 ou 10, dans lequel l'augmentation est réalisée de façon à ne pas dépasser une valeur limite supérieure prédéfinie pour le décalage de commutation (T_Offset(HCnt-1)) respectif (fig. 7 : S740).

12. Procédé selon la revendication 8, dans lequel la durée prédéfinie (T_Default + T_Offset(HCnt-1)) est diminuée si la deuxième valeur est plus petite que la première valeur (fig. 7 : S770).

13. Procédé selon la revendication 12, dans lequel la diminution est réalisée par décrémentation d'une valeur fixe (fig. 7 : S770).

14. Procédé selon la revendication 13, dans lequel la diminution est réalisée de façon à ne pas tomber en dessous d'une valeur limite inférieure prédéfinie pour le décalage de commutation (fig. 7 : S760).

15. Procédé selon l'une des revendications 8 à 13, dans lequel le décalage de commutation (T_Offset(HCnt-1)) n'est déterminé que quand le rotor (124) tourne au moins à une vitesse de rotation minimale (Nmin) prédéfinie.

16. Procédé selon l'une des revendications 8 à 15, dans lequel le décalage de commutation (T_Offset(HCnt-1)) est actualisé après chaque tour du rotor (124).

17. Procédé selon l'une des revendications précédentes, dans lequel la première valeur du courant de moteur (I_MEAS (HCnt-1)) est déterminée à l'étape A) à l'expiration d'un temps d'attente prédéfini (fig. 2 : t_MEAS) après le premier changement du signal de position de rotor (261, 262, 263, 264).

18. Procédé selon l'une des revendications précédentes, dans lequel au moins les étapes C) et D) ne sont exécutées que si une symétrisation du courant de moteur (320) est demandée (fig. 6 : S670).

19. Procédé selon la revendication 18, dans lequel est prévue une routine de traitement d'interruption (152 ; ISR_HALL) par laquelle, en fonctionnement, la symétrisation du courant de moteur est demandée (fig. 6 : S670).

20. Moteur à commutation électronique, lequel présente :

un rotor à aimant permanent (124) comportant au moins deux pôles de rotor (183, 186, 188, 189) ;
un stator (125) comportant au moins une phase (126) ;
un étage final (122) pour influencer un courant (320) circulant à travers ladite au moins une phase (126) ;
un capteur de position de rotor (140) commandé par la position du rotor (124) pour générer un signal de position de rotor (182) ;
un circuit de commande (130), lequel est associé au moteur (120) et conçu pour exécuter les étapes suivantes en vue d'égaliser le courant de moteur (320) :

A) après un changement (261, 262, 263, 264) du signal de position de rotor (182) qui est associé à une alternance (t_HALL) entre deux pôles de rotor et succède à une commutation du courant (320) à travers ladite au moins une phase (126), laquelle alternance est désignée ci-après par premier changement de polarité, une première valeur (I_MEAS(HCnt-1)) du courant de moteur (320) est déterminée ;
B) à l'expiration d'une durée prédéfinie (T_Default+T_Offset(HCnt-1)) après le premier changement de polarité, une nouvelle commutation est exécutée ;
C) après un changement (261, 262, 263, 264) du signal de position de rotor (182) qui succède à la nouvelle commutation et est associé à une alternance entre deux pôles de rotor, laquelle est désignée ci-après par deuxième changement de polarité, une deuxième valeur du courant de moteur (I_MEAS(HCnt)) est déterminée ;
D) en fonction de la différence entre première valeur (I_MEAS(HCnt-1)) et deuxième valeur (I_MEAS(HCnt), la valeur de la durée prédéfinie (T_Default + T_Offset(HCnt-1)) est modifiée pour, lors d'une utilisation de cette valeur modifiée, entraîner une égalisation de la première valeur du courant de moteur et de la deuxième valeur du courant de moteur.

Fig. 1

FIG. 2

FIG. 3A

FIG. 3B

400

HALL-INTERRUPT ⟜490

ISR_HALL ⟜S480

INIT ⟜S410

S420⟋ FCT_I_SYM = 1 ? →Y→ I_SYM ⟜S425

N

S430⟋ FCT_ADVANCE_COMMUT = 1 ? →Y→ ADVANCE_COMMUT ⟜S435

N

OTHER ⟜S440

FIG. 4

Fig. 5

600

```
         ┌──────────────┐
         │   ISR_HALL   │
         └──────┬───────┘
                │
       ┌────────▼─────────┐
       │ t_HALL := t_Timer1│ ─── S610
       └────────┬─────────┘
                │
       ┌────────▼─────────┐
       │    Increment     │ ─── S620
       │  Hall Count (HCnt)│
       └────────┬─────────┘
                │
         Y   ╱──▼──╲      S630
       ┌─────  HCnt = 5 ? ─────
       │     ╲─────╱
       │         │ N
 ┌─────▼────┐    │
 │ HCnt = 1 │◄── S632
 └─────┬────┘    │
       │         │
       └────────►│
                 │
                 ▼
```

S632 — HCnt = 1

```
       Y    ╱────────╲    N     ┌──── S642
  ┌─────────  N > Nmin  ──────► │ HALL_COMMUT │
  │         ╲    ?    ╱          └──────────────┘
  │          ╲──────╱
  │            S640
```

S652

```
   ╱────────╲  N
   ─ HCnt = 1 ? ──────┐
   ╲────────╱         │
       │ Y            │        S654
       │         ╱────────╲  N
 ┌─────▼─────┐   ─ HCnt = 2 ? ──────┐
 │ T_Offset =│    ╲────────╱        │
 │ T_Offset(1)│ S662   │ Y          │       S656
 └─────┬─────┘         │       ╱────────╲  N
       │         ┌─────▼─────┐  ─ HCnt = 3 ? ──────┐
       │  S664── │ T_Offset =│   ╲────────╱        │
       │         │ T_Offset(2)│      │ Y           │     S658
       │         └─────┬─────┘       │       ╱────────╲  N
       │               │       ┌─────▼─────┐ ─ HCnt = 4 ? ───┐
       │               │ S666──│ T_Offset =│  ╲────────╱     │
       │               │       │ T_Offset(3)│     │ Y        │
       │               │       └─────┬─────┘      │          │
       │               │             │     ┌──────▼─────┐    │
       │               │             │ S668│ T_Offset = │    │
       │               │             │     │ T_Offset(4)│    │
       │               │             │     └──────┬─────┘    │
       │               │             │            │          │
```

```
       ┌──────────────┐
       │ FCT_I_SYM := 1│ ─── S670
       └──────┬───────┘
              │
       ┌──────▼────────┐
       │ FCT_ADVANCE_  │ ─── S680
       │ COMMUT := 1   │
       └──────┬────────┘
              │    S690
       ┌──────▼──────────┐
       │ RETURN_INTERRUPT │◄────
       └─────────────────┘
```

FIG. 6

700

```
                    ┌─────────────┐
                    │    I_SYM    │
                    └──────┬──────┘
                           │
                    ╱──────┴──────╲
              Y    ╱  t_Timer1 >   ╲    N
         ┌────────〈  t_HALL +      〉────────┐
         │         ╲  T_Meas_l     ╱         │
         │          ╲     ?       ╱          │
         │           ╲───────────╱           │
         │             S710                  │
         ▼                                    │
  S720 ┌─────────────────────┐               │
       │ I_MEAS(HCnt) := AD   │               │
       └──────────┬──────────┘               │
                  │                           │
           ╱──────┴──────╲                    │
          ╱ I_MEAS(HCnt) <╲   Y               │
  S730  〈  I_MEAS(HCnt-1) 〉──────┐           │
          ╲      ?        ╱       │           │
           ╲─────────────╱        ▼           │
              │ N        ╱──────────────╲      │
              ▼         ╱ T_Offset(HCnt-1)╲ N  │
       ╱──────┴──────╲ 〈      > 0        〉───┤
      ╱ T_Offset(HCnt-1)╲  S760 ╲    ?     ╱   │
     〈     > 200       〉─┐     ╲─────────╱    │
      ╲      ?         ╱  │ Y       │ Y        │
       ╲──────────────╱   │         ▼          │
          │ N             │  ┌──────────────┐  │
          ▼               │  │DEC(T_Offset  │  │
  S750 ┌──────────────┐   │  │  (HCnt-1))   │  │
       │INC(T_Offset   │  │  └──────┬───────┘  │
       │  (HCnt-1))    │  │    S770 │          │
       └───────┬───────┘  │         │          │
               │          │         │          │
               └──────────┴────┬────┘          │
                               ▼               │
                    ┌──────────────────┐       │
                    │ FCT_I_SYM := 0    │ S780  │
                    └─────────┬─────────┘       │
                              │                 │
                   ┌──────────┴─────────┐       │
             S790  │       End          │◄──────┘
                   └────────────────────┘
```

# FIG. 7

800

ADVANCE_COMMUT

S810

$t\_Timer1$
$>$
$t\_HALL + T\_Default$
$+ T\_Offset (HCnt)$
$?$

N

Y

S820 COMMUT

S830 FCT_ADVANCE_COMMUT:=0

S840 END

Fig. 8

**IN DER BESCHREIBUNG AUFGEFÜHRTE DOKUMENTE**

**In der Beschreibung aufgeführte Patentdokumente**

- DE 4100864 A1
- WO 2001099267 A1